# EUROPEAN PATENT APPLICATION

(11) **EP 2 192 476 A2**
(43) Date of publication of application: **02.06.2010**
(21) Application number: 09172368.4
(22) Date of filing: 06.10.2009
(51) Int. Cl.: G06F 3/048

(54) **Content-dynamic touch screen activity bar**

(30) Priority: 08.10.2008 US 103731 P
(71) Applicant: Research In Motion Limited, Waterloo, Ontario N2L 3W8 (CA)
(72) Inventor: Ng, Oliver, Mississauga Ontario L4W 0B4 (CA); Adamczyk, Patryk, Mississauga Ontario L4W 0B4 (CA); Mujkic, Alen, Mississauga Ontario L4W 0B4 (CA); Bukurak, David, Kanata Ontario K2K 3K2 (CA); Langlois, Michael George, Kanata Ontario K2K 3K2 (CA); Steele, Joel, Mississauga Ontario L4W 0B4 (CA); Wood, Todd Andrew, Waterloo Ontario N2L 3W8 (CA)
(74) Representative: Roberts, Gwilym Vaughan

(57) **Abstract**

A mobile electronic device and an associated method provide for the outputting on a touch sensitive display or other display a content page plus an activity bar having one or more shortcut objects that relate to the subject matter of the content page. As different content pages are output, corresponding activity bars are also output, with each activity bar typically including one or more shortcut objects that relate to the subject matter of the content page that is being output.

## Description

### CROSS-REFERENCE TO RELATED APPLICATION

The instant application claims priority from U.S. Provisional Patent Application Serial No. 61/103,731 filed October 8, 2008, the disclosure of which is incorporated herein by reference.

### BACKGROUND

### Field

The disclosed and claimed concept relates generally to mobile electronic devices, and, more particularly, to a mobile electronic device and a method that features the outputting of an activity bar having a number of shortcut objects that are dynamically changeable dependent upon which content page is currently being output.

### Related Art

Numerous types of mobile electronic devices are known. Examples of such mobile electronic devices include, for instance, personal data assistants (PDAs), handheld computers, two-way pagers, cellular telephones, and the like. Many mobile electronic devices also feature wireless communication capability, although many such mobile electronic devices are stand-alone devices that are functional without communication with other devices.

As mobile electronic devices and their applications continue to be developed, the devices and applications have become increasingly more sophisticated while the "form factor", i.e., the shape and physical dimensions, of mobile electronic devices have become smaller. The result is that mobile electronic devices are becoming smaller and more sophisticated. Since typically at most only a limited amount of attention is paid to a mobile electronic device during its operation, and since the area of a display that is available for visual output typically is limited, it is desirable to enhance usability of a mobile electronic device by optimizing or at least improving the content and arrangement of its output or by simplifying the types of inputs that are needed during operation of the device or both. While previous efforts to improve mobile electronic devices have achieved some level of success, such devices and their associated methods have not been without limitation. It thus would be desirable to provide an improved mobile electronic device having improved operability, along with an associated method.

### BRIEF DESCRIPTION OF THE DRAWINGS

A full understanding of the disclosed and claimed concept can be obtained from the following Description when read in conjunction with the accompanying drawings in which:

Fig. 1 is a front elevational view of an exemplary mobile electronic device in accordance with the disclosed and claimed concept having a content page and an activity bar output thereon;

Fig. 2 is a view similar to Fig. 1, except depicting the mobile electronic device having another content page and another activity bar output thereon;

Fig. 3 is a view similar to Figs. 1 and 2, except depicting still another content page and still another activity bar;

Fig. 4, which comprises Fig. 4A, Fig. 4B, Fig. 4C, and Fig. 4D, is an exemplary table depicting a list of content pages of applications and the associated shortcut objects that relate to the content pages and that would be output in activity bars;

Fig. 5A depicts a first activity bar having a first quantity of shortcut objects;

Fig. 5B depicts a second activity bar having a second quantity of shortcut objects;

Fig. 5C depicts a third activity bar having a third quantity of shortcut objects;

Fig. 5D depicts a fourth activity bar having a fourth quantity of shortcut objects;

Fig. 5E depicts an activity bar having a quantity of shortcut objects;

Fig. 5F depicts another activity bar having another quantity of shortcut objects; and

Fig. 6 is an exemplary flowchart depicting certain aspects of a method that can be performed on the mobile electronic device of Fig. 1.

Similar numerals refer to similar parts throughout the specification.

### DESCRIPTION

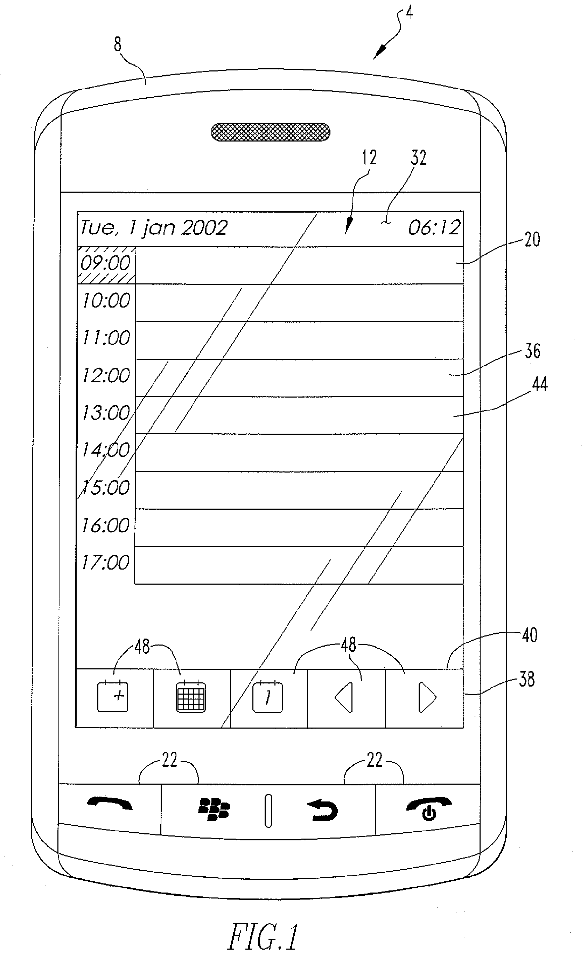

As is depicted in Fig. 1, a mobile electronic device 4 includes a housing 8 having an input/output apparatus 12 disposed thereon and a processor apparatus (not expressly depicted herein) disposed within the housing 8. The input/output apparatus 12 includes a display which in the exemplary embodiment depicted herein is a touch sensitive display 20. The touch sensitive display 20 comprises an output component that is configured to provide visual output responsive to output signals received from the processor apparatus, and an input component that is structured to provide input to the processor apparatus responsive to touch inputs on a surface of the touch sensitive display 20 from a finger or a stylus, for instance. The input apparatus 12 is also depicted as comprising a plurality of physical buttons 22 that can provide other input to the processor apparatus.

The processor apparatus includes a processor (not expressly depicted herein) and a memory (not expressly depicted herein) in operative connection, as known in the art. The processor may be, for example and without limitation, a microprocessor (µP). The memory may be any one or more of a variety of types of internal and/or external storage media such as, without limitation, RAM, ROM, EPROM(s), EEPROM(s), FLASH, and the like that provide a storage register for data storage such as in the fashion of an internal storage area of a computer, and can be volatile memory or nonvolatile memory. The memory has a number of applications as well as a number of routines stored therein which are executable on the processor to cause the mobile electronic device 4 to perform certain operations, as is well known by those of skill in the art. As employed herein, the expression "a number of and variations thereof shall refer broadly to a nonzero quantity, including a quantity of one. It is thus understood that the memory can be considered to be an example of a machine readable storage medium.

As can be understood from Figs. 1, 2, and 3, the touch sensitive display 20 provides visual output that typically is rendered by a graphic user interface (GUI). The touch sensitive display 20 can be said to include both a content region 36 and an activity bar region 38. The content region 36 can be employed to visually depict thereon a content page 44 of an application, with the content page 44 including visual content directed toward certain subject matter. In some instances a given application may comprise one or more content pages 44, and in other instances a given application may comprise instructions which when executed cause it to retrieve data, for example, and to output it as one or more content pages 44, although any given application may do either or both and may function in other fashions. At least a portion of most any content page 44 that is output in the content region 36 typically can be interacted with by a user via touch input.

The activity bar region 38 can be employed to visually depict thereon an activity bar 40 that corresponds with a respective content page 44 and that typically includes one or more shortcut objects 48 that are actuatable to provide a shortcut function to a routine, function, data object, application, etc. Any given shortcut object 48 is actuated responsive to a touch input on the touch sensitive display 20 in the vicinity of the desired shortcut object 48, although it is contemplated that the shortcut objects 48 may also be actuatable in other fashions, such as through the use of a navigational input via a track ball and a selection input via the track ball, or otherwise.

It is contemplated that the activity bar 40 would be of an elongated shape and would be situated near a bottom side of the touch sensitive display 20, with the shortcut objects 48 being linearly arranged in a single row along the longitudinal extent of the activity bar 40, and this is the exemplary configuration depicted in Figs. 1-3. However, it is to be appreciated that the activity bar 40 and shortcut objects 48 are not limited to this configuration. For example, the activity bar 40 and corresponding shortcut objects 48 could be vertically arranged along a side of the touch sensitive display 20. Furthermore, if the user rotates the device 4 from a portrait orientation (seen in Figs. 1-3) to a landscape orientation (not expressly depicted herein), it is contemplated that the activity bar 40 and corresponding shortcut objects 48 can be reconfigured such that they are arranged near a bottom of the touch sensitive display 20, spanning a length of the touch sensitive display 20 in the landscape orientation. It is also understood that the activity bar 40 may potentially be of a non-elongated shape or may include shortcut objects 48 that are arranged in multiple rows or otherwise without departing from the concept.

Advantageously, the shortcut objects 48 that are depicted and are available for actuation in the activity bar 40 are dynamically provided and are selected, at least in part, based upon the specific subject matter or other visual content of the content page 44 that is output contemporaneously with activity bar 40 that comprises the shortcut objects 48. That is, any particular application may include one or more content pages 44 or other visual content that can be visually or otherwise output. Some, if not all, of the content pages 44 have one or more shortcut objects 48 that are associated therewith and that are output in an activity bar 40 that can be said to likewise be associated with the content page 44. The shortcut objects 48 that are associated with any given content page 44 can be said to relate to the subject matter or other visual content of the content page 44, meaning that the operation which occurs on the mobile electronic device 4 in response to an actuation of one of the shortcut objects 48 relates in some fashion to the subject matter or other visual content of the content page 44.

When any particular content page 44 or other visual content is output on the touch sensitive display 20, such as in the content region 36, the activity bar 40 that is associated with the particular content page 44 is also output, such as in the activity bar region 38, and one or more shortcut objects 48 that in one fashion or another relate to the subject matter of the content page 44 or other visual content are output in the activity bar 40. While the selection of the shortcut objects 48 for output in the activity bar 40 in association with a content page 44 is typically based, at least in part, upon the subject matter of the content page 44, in some circumstances other shortcut objects 48 may be selected for output in association with a content page 44 based upon other criteria. It is also to be appreciated that in some embodiments the shortcut objects 48 may themselves be considered to together form the activity bar 40.

It is contemplated that the shortcut objects 48 can include textual or symbolic representations or both to indicate their particular function with respect to the content page 44 in association with which they appear. For example, in a music player application (not expressly depicted herein), a "play" shortcut object 48 that is output in association with a content page 44 of the music player application can be depicted either textually, such as by comprising the depicted word "play", or symbolically, with a forward-facing arrow, i.e., a rightward-facing arrow or other symbol, as known in the art, or both. However, it is to be understood that the shortcut objects 48 are not limited to those shown and depicted in the figures herein.

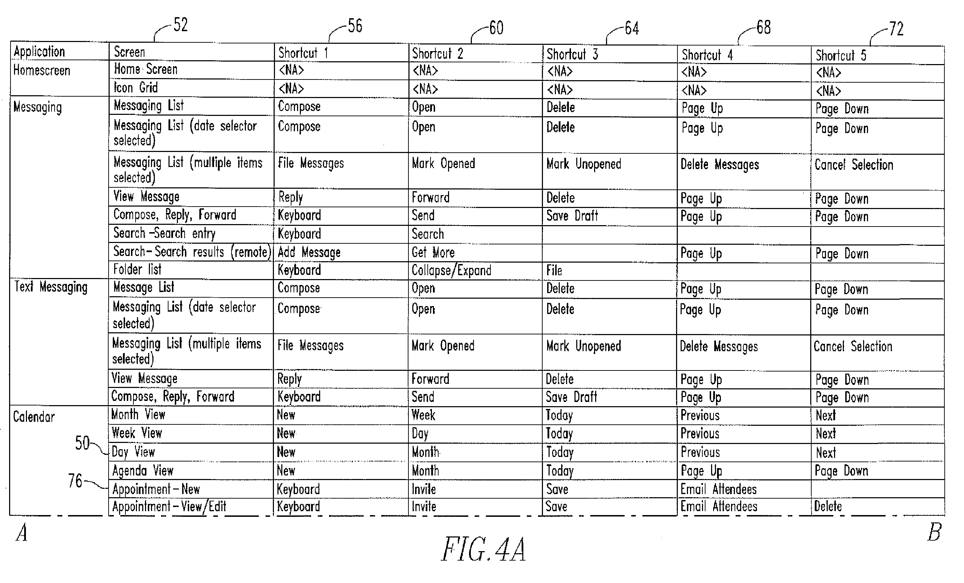

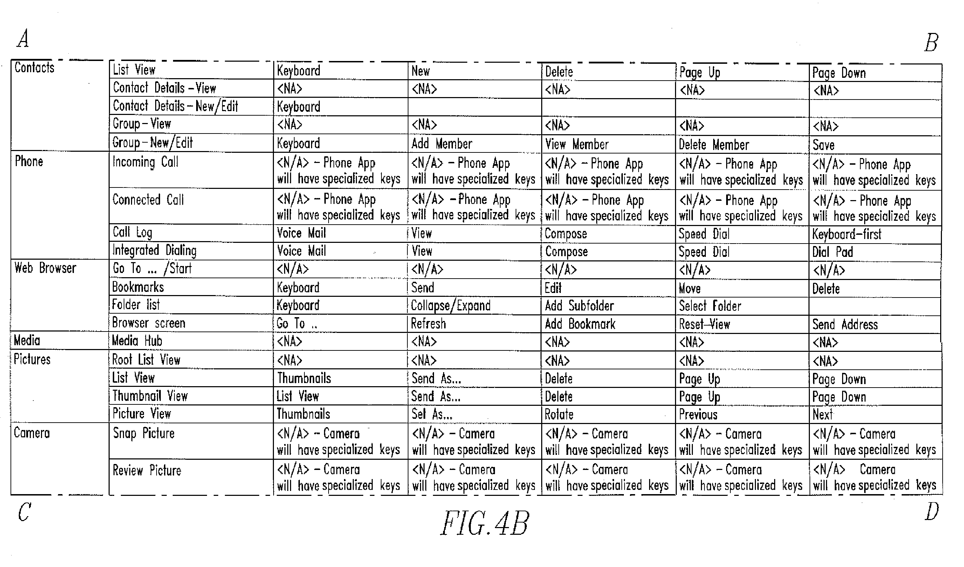

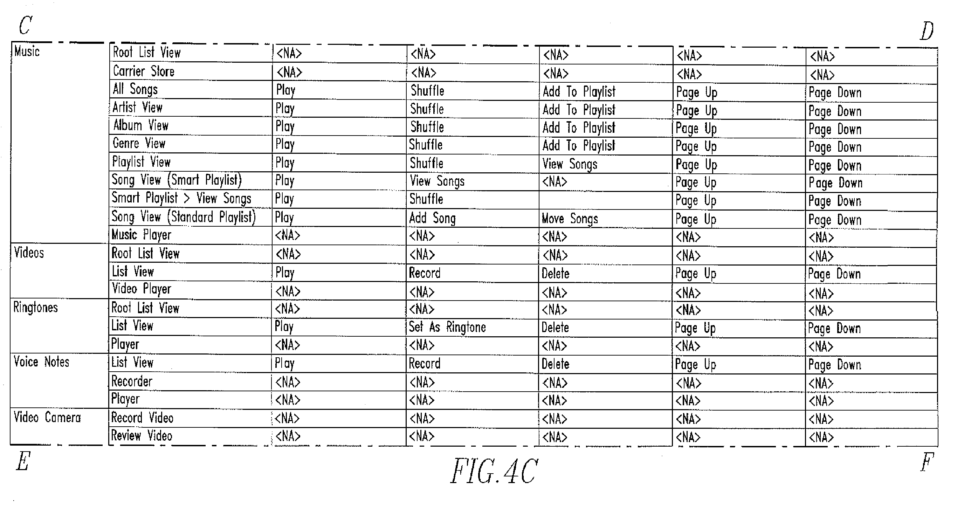

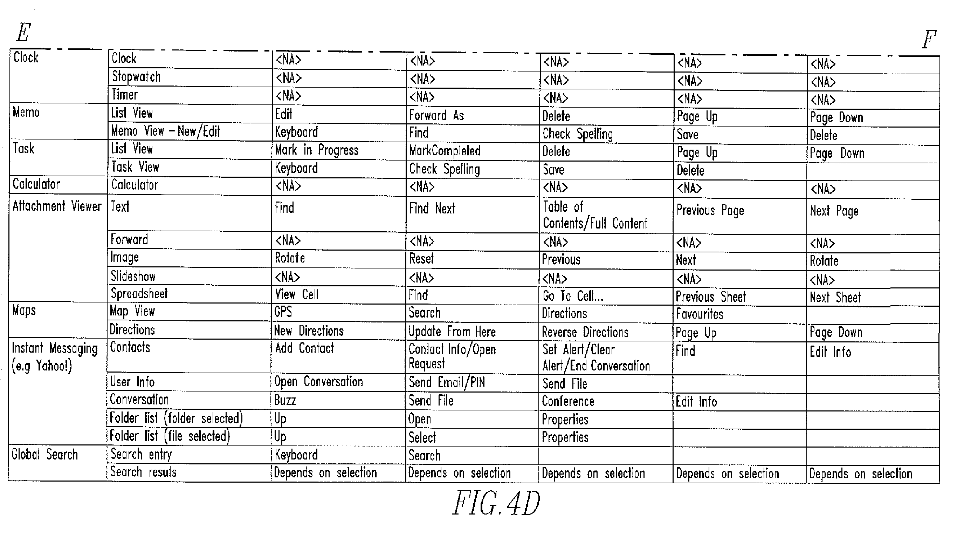

Specific examples of content pages 44, the associated activity bars 40, and the related shortcut objects 48 will now be described. For instance, Fig. 1 depicts a Calendar application 32, and it more specifically depicts a "Day View" content page 44 of the calendar application 32. As can be understood from the table of Fig. 4 (which comprises Fig. 4A, Fig. 4B, Fig. 4C, and Fig. 4D), the content page 44 is indicated with the name "Day View" as is depicted in the row indicated at the numeral 50 and in the column 52 that is entitled "Screen". The shortcut objects 48 to be depicted in the activity bar 40 in such a situation comprise a plurality of shortcut objects 48 that are likewise depicted in the row 50 and are entitled "New", "Month", "Today", "Previous", and "Next" as are indicated in the columns 56, 60, 64, 68, and 72 and are entitled "Shortcut 1", "Shortcut 2", "Shortcut 3", "Shortcut 4", and "Shortcut 5", respectively. As can be seen in Fig. 1, each of these shortcut objects 48 are depicted on the activity bar 40 by a corresponding symbol (i.e., "Previous" is represented by a backward-facing arrow, i.e., a leftward-facing arrow, and "Next" is represented by a forward-facing arrow, i.e., a rightward-facing arrow), although as previously mentioned, the shortcut objects 48 for this particular content page 44 are not limited to the symbols presently shown, and could alternatively or additionally include textual representations.

As can be further understood from the columns 52, 56, 60, 64, 68, and 72 and the row indicated at the numeral 76 in the table in Fig. 4, if the "New" shortcut object 48 (depicted in Fig. 1 as a calendar page with a "+" symbol thereon) is selected, the "Appointment New" content page 44 of the Calendar application 32 is output in the content region 36 of the touch sensitive display 20, and the shortcut objects 48 depicted in the activity bar 40 will be those entitled "Keyboard", "Invite", "Save", and "Email Attendees". It can be understood from Fig. 4 that at least some of the shortcut objects 48 associated with the "Appointment-New" content page 44 are different than those associated with the "Day View" content page 44 of the same Calendar application 32, in fact all are different. It therefore can be seen that upon replacing the content page 44 that is being output in the content region 36 of the touch sensitive display 20 with another different content page 44, the shortcut objects 48 that had been output in the activity bar 40 in the activity bar region 38 can be automatically and dynamically replaced with another activity bar 40 having shortcut objects 48 which relate in one fashion or another to the subject matter or other visual content of the newly depicted content page 44. The new content page 44, as well as the previous content page 44 that was replaced by the new content page 44, may be of the same application or of different applications.

That is not to say that all of the shortcut objects 48 need to change along with a change in the corresponding content page 44. To the contrary, some or all of the shortcut objects 48 may remain the same. For instance, the various content pages 44 of any given application may have subject matter that is similar to other content pages 44 of the same application, or it may otherwise be desirable to provide one or more shortcut objects 48 in common.

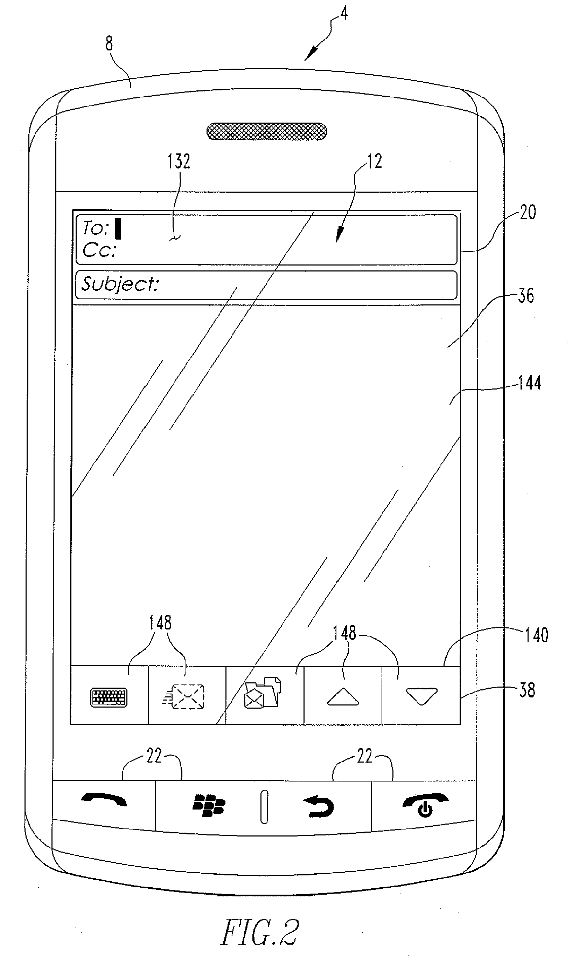

It is also noted that the activation of a different application on the mobile electronic device 4, whether through actuation of a shortcut object 48 or otherwise, can likewise cause other shortcut objects 48 to be displayed. For example, Fig. 2 depicts another application, in this case a messaging application 132, being executed on the processor and having a content page 144 and an activity bar 140 with associated shortcut objects 148 that are output in the content region 36 and activity bar region 38, respectively, of the touch sensitive display 20. Fig. 2 is an example of the shortcut objects 148 "Keyboard", "Send", "Save Draft", "Page Up", and "Page Down" which are output on the touch sensitive display 20 simultaneously and in conjunction with the outputting of any of the "Compose", "Reply", and "Forward" content pages. By way of example, it is further noted that the output of Fig. 2 could be achieved if the user had actuated the shortcut object "Compose", such as would have been output with the "Messaging List" content page, or if the user had actuated either of the shortcut objects "Reply" and "Forward", such as would have been output with the "View Message" content page. In the example of Figs. 1 and 2, none of the shortcuts objects 48 and 148 are common therebetween.

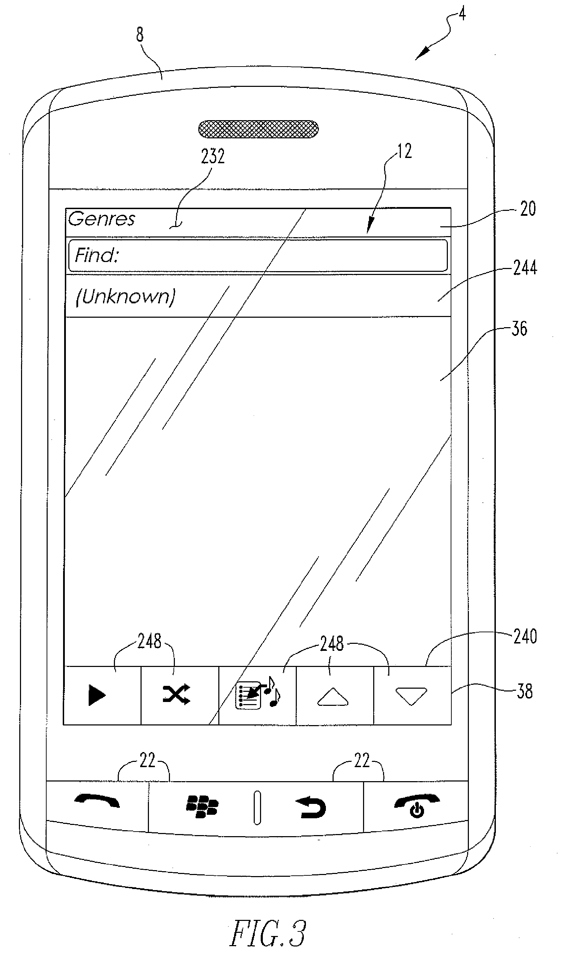

Another example is provided in Fig. 3 where yet another application, in this case a media application 232, is being executed on the processor. Another content page 244 and another activity bar 240 having a number of associated shortcut objects 248 are depicted in Fig. 3 as being output on the content region 36 and activity bar region 38, respectively, of the touch sensitive display 20. In Figs. 2 and 3, it can be seen that a pair of the shortcut objects 148 in Fig. 2 are the same as another pair of the shortcut objects 248 in Fig. 3.

It is to be appreciated that the above-identified activity bars 40, 140, and 240 and corresponding shortcut objects 48, 148, 248 are not limited to the above-described applications. Indeed, it is contemplated that a plurality of applications can be executed on the processor, with each of the applications having one or more content pages 44 that have related shortcut objects 48 that are output in an activity bar 40. For example, the applications that are executable on the processor might include messaging, text messaging, calendar, contacts, telephone, web browsing, media, picture, music, videos, ringtone, voice notes, memo, tasks, attachment viewer, maps, instant messaging, and global search applications, although it is appreciated that the applications that can be executed on the processor are not limited to those mentioned above.

Advantageously, therefore, it can be seen that the shortcut objects 48, 148, and 248 that are depicted in the activity bars 40, 140, and 240 can be dynamically selected and varied according to the subject matter or other visual content of the respective content pages 44, 144 and 244 that are depicted on the mobile electronic device 4. In other words, the shortcut objects 48, 148, and 248 that are depicted on the activity bars 40, 140, and 240 can vary based upon the application that is currently being executed and the content page 44 or other visual content that is currently being output on the touch sensitive display 20. It can be seen that any of a variety of predetermined events such an actuation of a shortcut 48 of a currently output content page 44 or an initiation of a new application 32 can result in the outputting of a new content page 44 and associated shortcut objects 48.

By providing the shortcut objects 48, 148, and 248 in a fashion that varies with the subject matter or other visual content of the respective content pages 44, 144 and 244, input is facilitated since relatively less visual and mental effort is required in performing tasks that are likely to be associated with the respective content pages 44, 144 and 244 since many of such tasks can be performed or at least initiated by selecting the shortcut objects 48, 148, and 248 that have been output simultaneously and in conjunction with the respective content pages 44, 144 and 244. That is, less visual and mental attention and effort are required to select for a desired function a shortcut objects 48, 148, or 248 that has been output on the touch sensitive display 20 than would be required if it were instead necessary to hunt through one or more menus to initiate the desired function. This allows input that is quicker and requires less effort, and such facilitated input is desirable because it is less demanding of the user and results in the reduced consumption of processor and battery power. It is understood that Figs. 1, 2, and 3 are merely examples of fashions in which the shortcut objects 48, 148, and 248 can be varied in the activity bar 40, 140, and 240 according to the subject matter of the content page 44, 144, and 244 that is currently being output in the content region 36 of the touch sensitive display 20. The visual representations of the various shortcut objects 48, 148, and 248 are not intended to be limiting and rather are intended to be exemplary only.

It can be understood from Fig. 4 that numerous other content pages 44 and related shortcut objects 48 are available, and this indicates that numerous other shortcut objects 48 having different visual appearances than those expressly depicted herein may be output at different times in the activity bar 40 depending upon the subject matter of the particular content page 44 of any given application 32 that is being output on the touch sensitive display 20. It is also noted that Fig. 4 is not intended to be an exhaustive list of content pages 44 or shortcut objects 48.

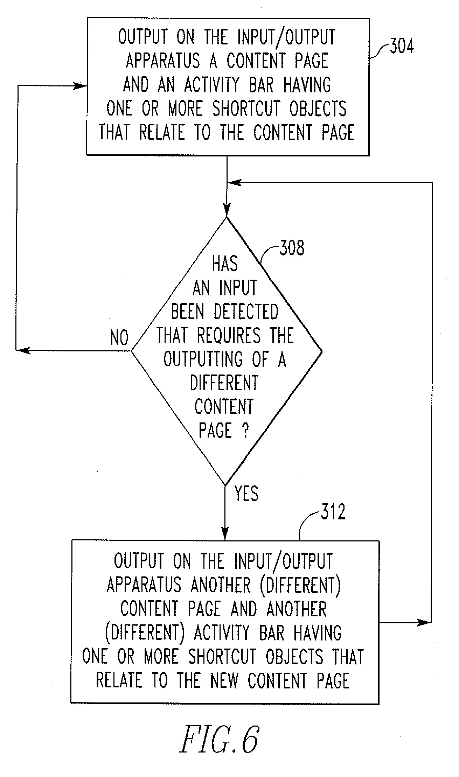

An exemplary flowchart depicting certain aspects of a method that can be performed on the mobile electronic device 4 is depicted generally in Fig. 6. At 304, the processor apparatus causes the outputting on the input/output apparatus 12 of a content page 44 and an associated activity bar 40 having one or more shortcut objects 48 that relate to the content page 44. It may then be determined, as at 308, whether an input has been detected that requires the outputting of a different content page 44. Such an input may be a detected actuation of a shortcut object 48 or may be some other type input. If no such input is detected at 308, processing continues, as at 304, where the content page 44 and the activity bar 40 with the shortcut objects 48 continue to be output. However, if at 308 such an input is detected, processing continues, as at 312, where the processor apparatus provides output signals to the input/output apparatus 12 to cause the outputting of another content page 44 different than the previous content page 44, and the further outputting of another activity bar 40 having one or more shortcut objects 48 that relate to the new content page 44, with at least one of the new shortcut objects 48 being different from at least one of the shortcut objects 48 that were output at 304. Processing thereafter continues, as at 308,
where it may be determined whether an input has been detected that again requires the outputting of a different content page 44.

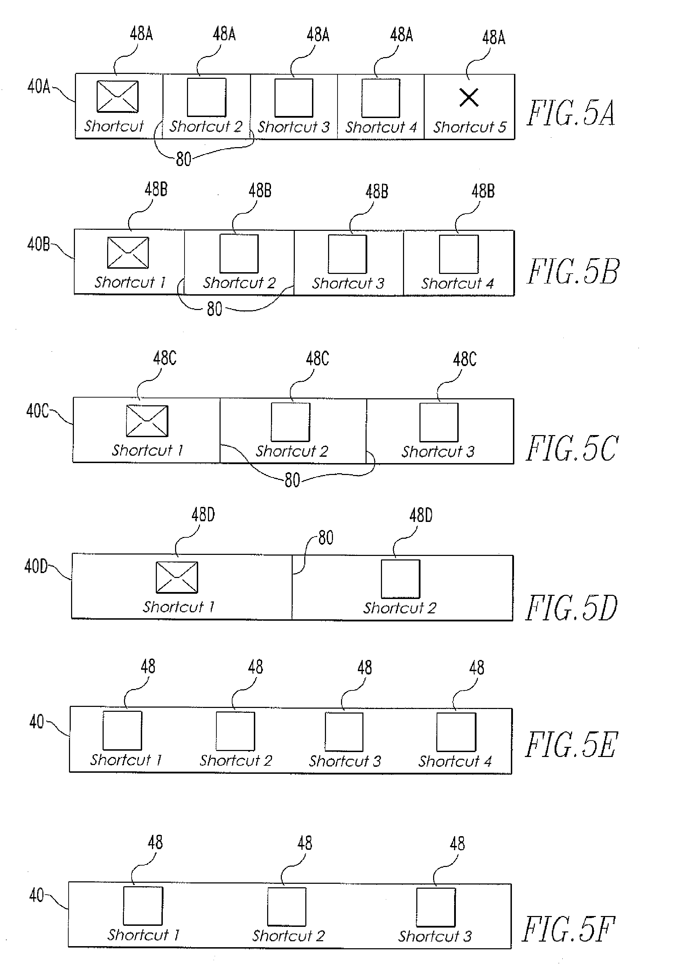

Further advantageously, the positioning of adjacent shortcut objects 48 or the size thereof or both can be dynamically adjusted based upon factors such as, for instance, the quantity of shortcut objects 48 that are being displayed in the activity bar 40. By way of example, the shortcut objects 48 may be arranged to be equally sized or evenly spaced along the longitudinal extent of the activity bar 40 or both, such as are indicated generally in Figs. 5A, 5B, 5C, 5D, 5E, and 5F by way of example. For instance, if five shortcut objects 48A are output in the activity bar 40A as is indicated in Fig. 5A, the shortcut objects 48A may occupy substantially the entirety of the longitudinal extent of the activity bar 40A such that each shortcut object 48A occupies substantially one-fifth of the longitudinal extent of the activity bar 40A. In this regard, the shortcut objects 48A are depicted as being substantially unspaced from one another, with the divisions between the active areas of the touch sensitive display 20 that correspond with adjacent shortcut objects 48A being depicted by a number of visual junction elements 80 that depict the adjacent edges of adjacent shortcut objects 48A as being unspaced. In certain circumstances, the shortcut objects 48A may be considered to each include a visual object, such as a depiction of an envelope, a box, or an "X" from the example of Fig. 5A, along with the surrounding peripheral region. The disposition of the shortcut objects 48A substantially unspaced means that either the visual object or the surrounding peripheral region or both of a shortcut object 48A are disposed substantially unspaced from either the visual object or the surrounding peripheral region or both of an adj acent shortcut obj ect 48A.

In Figs 5B, 5C, and 5D, the activity bars 40B, 40C, and 40D are depicted as having four, three, and two shortcut objects 48B, 48C, and 48D, respectively, with the longitudinal extent of the activity bar 40 being equally divided among the shortcut objects 48B, 48C, and 48D. It therefore can be seen that the size of one of the shortcut object 48A is relatively smaller than that of, say, a shortcut object 48B, 48C, or 48D since a relatively greater number of shortcut objects 48A are being output in the activity bar 40A.

It is to be understood that in other embodiments the shortcut objects 48 may be spaced from one another a distance that varies inversely with the quantity of shortcut objects 48 in the activity bar 40. In such a situation, the shortcut objects 48 may be of substantially equal size, although this need not necessarily be the case. By way of example, the spacing between adjacent shortcut objects 48 is lesser when four are being output in an activity bar 40 than when three are being output in an activity bar 40, and this is the situation depicted in Figs. 5E and 5F. In such a configuration, the shortcut objects may be considered to include a visual object without additionally including the surrounding peripheral region.

It is also contemplated that the above-described activity bar 40 can be utilized on other devices not having a touch sensitive display without departing from the present concept. For example, the activity bar 40 could be arranged on an LCD or similar display, adjacent a plurality of buttons arranged in alignment with the shortcut objects of the activity bar. Such an arrangement potentially could be implemented with the use of buttons such as the physical buttons 22 depicted in Figs. 1-3. Accordingly, when a user wishes to navigate within one of the applications, they would depress or otherwise actuate the button in alignment with the desired shortcut object.

While particular embodiments of the activity bar have been described herein, it will be appreciated by those skilled in the art that changes and modifications may be made thereto without departing from the disclosure in its broadest aspects and as set forth in the following claims.

## Claims

1. A method on a mobile electronic device (4) that comprises an input/output apparatus (12) and a processor apparatus (16), the input/output apparatus being structured to provide input to the processor apparatus and to provide visual output responsive to output signals from the processor apparatus, the processor apparatus comprising a processor (24) and a memory (28) having stored therein a number of applications (32, 132, 232) that are executable on the processor to cause the input/output apparatus to output one or more content pages (44, 144, 244), the method comprising:
outputting on the input/output apparatus a content page (44, 144, 244);
outputting on the input/output apparatus a number of shortcut objects (48, 148, 248), at least some of which are selected for said outputting based upon the content page, and at least some of which are actuatable to provide input to the processor apparatus;
responsive to a predetermined event, outputting on the input/output apparatus another content page (44, 144, 244); and
outputting on the input/output apparatus another number of shortcut objects (48, 148, 248), at least some of which are selected for said outputting based upon the another content page, and at least one of which is different than the shortcut objects of the number of shortcut objects.

2. The method of Claim 1 wherein the outputting of the content page and the outputting of the number of shortcut objects are initiated by a given application (32, 132, 232) executed on the processor apparatus, and wherein the outputting of the another content page and the outputting of the another number of shortcut objects are also initiated by the given application executed on the processor apparatus.

3. The method of Claim 1 wherein at least some of the number of shortcut objects relate to the subject matter of the content page, and wherein at least some of the another number of shortcut objects relate to the subject matter of the another content page.

4. The method of Claim 1 wherein the outputting of the number of shortcut objects comprises outputting in an activity bar region (38) of the input/output apparatus an activity bar (40, 140, 240) that comprises the number of shortcut objects.

5. The method of Claim 1 wherein the outputting of the another number of shortcut objects comprises replacing in the activity bar region the activity bar with another activity bar (40, 140, 240) that comprises the another number of shortcut obj ects.

6. The method of Claim 1 further comprising detecting an actuation of a shortcut object of the number of shortcut objects as the predetermined event.

7. The method of Claim 6 wherein the input/output apparatus comprises a touch sensitive display (20), and wherein the detecting of the actuation of the shortcut object comprises detecting a touch input on the touch sensitive display.

8. The method of Claim 1 wherein the number of shortcut objects are of a quantity different than that of the another number of shortcut objects, the number of shortcut objects being substantially equally sized and being disposed along a longitudinal extent of the activity bar, the another number of shortcut objects being substantially equally sized and being disposed along a longitudinal extent of the another activity bar, the number of shortcut objects each being of a size unequal to that of the another number of shortcut objects.

9. The method of Claim 8 wherein the number of shortcut objects are situated unspaced from one another along substantially the entirety of the longitudinal extent of the activity bar, and wherein the another number of shortcut objects are situated unspaced from one another along substantially the entirety of the longitudinal extent of the another activity bar.

10. The method of Claim 1 wherein the number of shortcut objects are of a quantity different than that of the another number of shortcut objects, the number of shortcut objects being substantially equally spaced from one another along a longitudinal extent of the activity bar, the another number of shortcut objects being substantially equally spaced from one another along a longitudinal extent of the another activity bar, the number of shortcut objects each being spaced apart a distance different than that of the another number of shortcut objects.

11. A mobile electronic device (4) comprising:
a processor apparatus (16);
an input/output apparatus (12) structured to provide input to the processor apparatus and to provide visual output responsive to output signals from the processor apparatus;
the processor apparatus comprising a processor (24) and a memory (28) having stored therein a number of applications (32, 132, 232) that are executable on the processor to cause the mobile electronic device to perform operations comprising:
outputting on the input/output apparatus a content page (44, 144, 244);
outputting on the input/output apparatus a number of shortcut objects (48, 148, 248), at least some of which are selected for said outputting based upon the content page, and at least some of which are actuatable to provide input to the processor apparatus;
responsive to a predetermined event, outputting on the input/output apparatus another content page (44, 144, 244); and
outputting on the input/output apparatus another number of shortcut objects (48, 148, 248), at least some of which are selected for said outputting based upon the another content page, and at least one which of is different than the shortcut objects of the number of shortcut objects.

12. The mobile electronic device of Claim 11 wherein the outputting of the content page and the outputting of the number of shortcut objects are initiated by a given application (32, 132, 232) executed on the processor apparatus, and wherein the outputting of the another content page and the outputting of the another number of shortcut objects are also initiated by the given application executed on the processor apparatus.

13. The mobile electronic device of Claim 11 wherein at least some of the number of shortcut objects relate to the subject matter of the content page, and wherein at least some of the another number of shortcut objects relate to the subject matter of the another content page.

14. The mobile electronic device of Claim 11 wherein the outputting of the number of shortcut objects comprises outputting in an activity bar region (38) of the input/output apparatus an activity bar (40, 140, 240) that comprises the number of shortcut objects.

15. The mobile electronic device of Claim 11 wherein the outputting of the another number of shortcut objects comprises replacing in the activity bar region the activity bar with another activity bar (40, 140, 240) that comprises the another number of shortcut objects.

16. The mobile electronic device of Claim 11 wherein the operations further comprise detecting an actuation of a shortcut object of the number of shortcut objects as the predetermined event.

17. The mobile electronic device of Claim 16 wherein the input/output apparatus comprises a touch sensitive display (20), and wherein the detecting of the actuation of the shortcut object comprises detecting a touch input on the touch sensitive display.

18. The mobile electronic device of Claim 11 wherein the number of shortcut objects are of a quantity different than that of the another number of shortcut objects, the number of shortcut objects being substantially equally sized and being disposed along a longitudinal extent of the activity bar, the another number of shortcut objects being substantially equally sized and being disposed along a longitudinal extent of the another activity bar, the number of shortcut objects each being of a size unequal to that of the another number of shortcut objects.

19. The mobile electronic device of Claim 18 wherein the number of shortcut objects are situated unspaced from one another along substantially the entirety of the longitudinal extent of the activity bar, and wherein the another number of shortcut objects are situated unspaced from one another along substantially the entirety of the longitudinal extent of the another activity bar.

20. The mobile electronic device of Claim 11 wherein the number of shortcut objects are of a quantity different than that of the another number of shortcut objects, the number of shortcut objects being substantially equally spaced from one another along a longitudinal extent of the activity bar, the another number of shortcut objects being substantially equally spaced from one another along a longitudinal extent of the another activity bar, the number of shortcut objects each being spaced apart a distance different than that of the another number of shortcut objects.
